# EUROPÄISCHE PATENTSCHRIFT

(11) **EP 0 922 882 B1**
(45) Veröffentlichungstag und Bekanntmachung des Hinweises auf die Patenterteilung: **29.08.2007**
(21) Anmeldenummer: 98120394.6
(22) Anmeldetag: 28.10.1998
(51) Int. Cl.: F16F 15/16

(54) **Dichtung für Torsionsschwingungsdämpfer**
Sealing for torsional vibration damper
Etancheité pour amortisseur de vibrations torsionelles

(30) Priorität: 29.10.1997 DE 19747785; 05.11.1997 DE 19748730; 22.04.1998 DE 19817905
(43) Veröffentlichungstag der Anmeldung: 16.06.1999
(60) Teilanmeldung: 05021355.2
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, 52351 Düren (DE); Heidingsfeld, Dietmar, Dipl.-Ing., 52078 Aachen (DE)
(74) Vertreter: Castell, Klaus

(56) Entgegenhaltungen:
- DE-A- 3 322 374
- DE-A- 4 127 439
- DE-A- 4 332 465
- DE-C- 19 612 352
- DE-U- 1 818 286
- DE-U- 7 926 142
- DE-U- 9 213 357
- US-A- 4 739 866
- US-A- 4 856 636
- US-A- 5 042 632
- US-A- 5 150 777
- US-A- 5 293 978
- US-A- 5 355 747
- US-A- 5 382 193
- US-A- 5 518 100
- US-A- 5 601 492
- US-A- 5 636 553
- US-A- 5 653 639
- US-A- 5 667 053

## Beschreibung

Die Erfindung betrifft einen Torsionsschwingungsdämpfer mit zwei gegeneinander drehbeweglich angeordneten Baugruppen sowie einer Federkammer. In einer derartigen Federkammer ist in der Regel zumindest eine tangential zwischen den beiden Baugruppen wirksame Feder, zum Beispiel eine Spiralfeder, angeordnet.

Im folgendem wird unter den Begriffen "axial" eine Richtung parallel zur Hauptrotationsachse des Torsionsschwingungsdämpfers, "radial" eine von der Hauptrotationsachse wegweisende, in einer zur Hauptrotationsachse senkrecht stehenden Ebene liegende Richtung, und "tangential" eine zu den beiden vorgenannten Richtungen senkrechte Richtung verstanden.

Ein derartiger Torsionsschwingungsdämpfer ist beispielweise aus der US 5,667,053 bekannt, wobei hier die Federkammer mit einer an den beiden Baugruppen anliegenden Tellerfeder abgedichtet ist. Demgegenüber offenbart die DE 196 12 352 einen gattungsgemäßen Torsionsschwingungsdämpfer, wobei hier ein hochviskoses Medium als dichtendes Medium zur Anwendung kommt.

Es ist Aufgabe vorliegender Erfindung, einen gattungsgemäßen Torsionsschwingungsdämpfer bereit zu stellen, bei welchem die Federkammer gegen ein Austreten von Schmiermittel oder ähnlichem, wie zum Beispiel Fett, abgedichtet ist.

Als Lösung schlägt die Erfindung einen gattungsgemäßen Torsionsschwingungsdämpfer mit den kennzeichnenden Merkmalen des Anspruchs 1 vor.

Hierbei folgt die Erfindung dem Grundgedanken, daß in der Federkammer Fett ubiquitär umherfliegt und bei Auftreffen auf eine Wand eine Zentrifugalkraft erfährt, die es nach radial außen bewegt. Auf diese Weise erfährt auch Fett, welches auf die Leitflächen trifft, eine radiale Beschleunigung. Aufgrund der zur Federkammer hinweisenden, radialen Oberflächen der Leitflächen, ist gewährleistet, daß das auf einer Leitfläche befindliche Fett aufgrund der Zentrifugalkraft entlang der Oberfläche radial nach außen transportiert wird.

Die zweite Leitfläche gewährleistet hierbei, daß durch den Spalt zwischen erster Leitfläche und zweiter Baugruppe ubiquitär umherfliegendes Fett nicht hindurchtreten kann, da es zuvor von dieser zweiten Leitfläche abgefangen wird. Dadurch daß die zweite Leitfläche federkammerseitig hinsichtlich des Spaltes und somit auch federkammerseitig hinsichtlich wenigstens eines Bereiches der ersten Leitfläche angeordnet ist, wird Fett, welches die zweite Leitfläche radial außen verlassen sollte zumindest durch die erste Leitfläche abgefangen. Die Zentrifugalkraft verhindert nämlich, daß dieses Fett wieder nach radialinnen, auf den Spalt zwischen erster Leitfläche und zweiter Baugruppe zu, beschleunigt wird. Aufgrund des Spaltes zwischen erster Leitfläche und zweiter Baugruppe ist es mittels vorliegender Erfindung möglich, die Federkammer berührungslos abzudichten. Somit beeinflußt diese Anordnung die sonstigen Eigenschaften des Torsionsschwingungsdämpfers, insbesondere bei dessen Einsatz für Kupplungen, in vorteilhafter Weise nicht.

Die erste Leitfläche kann als ein Leitblech ausgestaltet sein, welches mit der ersten Baugruppe fest verbunden ist. Diese Ausgestaltung hat gegenüber einer einstückigen Ausbildung von erster Baugruppe und erster Leitfläche den Vorteil, daß diese einfacher hergestellt werden kann. Insbesondere können auf diese Weise schwer zu verwirklichende Hinterschneidungen vermieden werden. Als Verbindung zwischen Leitblech und erster Baugruppe kommen alle geeigneten Verbindungsarten, wie Löten, Schweißen, Nieten und ähnliches in Betracht.

Die Herstellung eines erfindungsgemäßen Torsionsschwingungsdämpfers vereinfacht sich insbesondere, wenn diese Verbindung zwischen erster Baugruppe und Leitblech als Clipsverbindung ausgestaltet ist. Zum Beispiel kann das Leitblech als Klammer gebogen sein, die durch die Eigenelastizität des Materials sich leicht öffnend einen Vorsprung der ersten Baugruppe umgreift.

Insbesondere kann das Leitblech ringscheibenförmig ausgestaltet sein. In der Regel weist ein gattungsgemäßer Torsionsschwingungsdämpfer, nämlich mehrere tangential angeordnete Feder bzw. Federkammern auf. Bei einer derartigen, ringförmigen Anordnung bedingt somit eine ringförmige Ausgestaltung des Leitblechs eine besonders einfache Montage, da in einem Arbeitsgang für sämtliche Federkammern ein entsprechendes Leitblech montiert werden kann. Auch ist bei dieser Ausgestaltung wegen der radialen Symmetrie einer Ringscheibe die Ausbildung einer Klammer zum Verbinden des Leitblechs mit der ersten Baugruppe besonders einfach zu realisieren.

Desweiteren kann die zweite Leitfläche als Leitscheibe ausgestaltet sein. Eine derartige Leitscheibe kann in unkomplizierter Weise federkammerseitig über dem Spalt zwischen erster Leitfläche und zweiter Baugruppe angeordnet werden. Insbesondere ist es aus den vorgenannten Gründen vorteilhaft, die als zweite Leitfläche dienende Leitscheibe ringscheibenförmig auszugestalten.

Auch kann die Leitscheibe fest mit der ersten Leitfläche bzw. fest mit dem Leitblech verbunden sein. Diese feste Verbindung kann zum Beispiel durch eine Clips-Verbindung, eine Niet-Verbindung oder eine Torx-Nietverbindung bereit gestellt werden. Durch diese feste Verbindung wird die Stabilität der Anordnung aus Leitscheibe und erster Leitfläche bzw. Leitblech erhöht. Insbesondere ist es möglich die Leitscheibe aus einem leichten und gering reibenden Material, wie zum Beispiel Kunststoff herzustellen, da die erste Leitfläche bzw. das Leitblech der Stabilisierung der Leitscheibe dient. Diese Anordnung ermöglicht desweiteren eine Vormontage von Leitscheibe und Leitblech, wodurch sich die Herstellung eines erfindungsgemäßen Torsionsschwingungsdämpfers vereinfacht.

Zwischen erster Leitfläche und zweiter Leitfläche kann zumindest eine zur Federkammer hinweisende Öffnung vorgesehen sein. Durch diese Öffnung kann Schmiermittel bzw. Fett, welches auf irgendeine Weise, zum Beispiel durch Kriechvorgänge, hinter die zweite Leitfläche gelangt ist, in die Federkammer zurückgeleitet werden. Insbesondere ist es vorteilhaft, wenn die Öffnung derart angeordnet ist, daß ein Partikel mit einer radialen Bewegungskomponente hindurchtreten kann. In diesem Fall werden Partikel hinter der zweiten Leitfläche in die Federkammer zurückgeleitet.

Zwischen erster und zweiter Leitfläche kann in der Nähe des Spaltes, welcher zwischen erster Leitfläche und zweiter Baugruppe angeordnet ist, ein beruhigter Raum vorgesehen sein. In diesem Raum kann sich hinter die zweite Leitfläche gelangtes Schmiermittel ansammeln und wird somit an einem Durchtreten des Spaltes gehindert. Ein derartiger beruhigter Raum ist insbesondere im Zusammenhang mit einer entsprechend an der radialen Außenseite des Raumes vorgesehenen Öffnung, durch welche das angesammelte Fett in die Federkammer zurückgeführt werden kann, vorteilhaft.

Die zweite Baugruppe des erfindungsgemäßen Torsionsschwingungsdämpfers kann eine dritte im wesentlichen radiale Leitfläche umfassen, welche einen axialen Spalt zwischen zweiter Leitfläche und zweiter Baugruppe auf einer der Federkammer abgewandten Seite überdeckt. Auf diese Weise können Schmiermittelpartikel, die einen gegebenenfalls vorhandenen, in axialer Richtung offenen Spalt zwischen zweier Leitfläche und zweiter Baugruppe durchtreten von der dritten Leitfläche aufgefangen und auf dieser radial nach außen transportiert werden. Vorteilhafterweise ist der Spalt zwischen erster Leitfläche und zweiter Baugruppe in axialer Richtung von der Federkammer weiter entfernt als diese dritte Leitfläche. Erreicht ein auf der dritten Leitfläche transportiertes Partikel das radial außenliegende Ende der dritten Leitfläche und löst sich, durch die Zentrifugalkraft bedingt, von deren Ende in radialer Richtung, kann es die Federkammer nicht verlassen, da die eigentliche Öffnung der Federkammer, nämlich der Spalt zwischen erster Leitfläche und zweiter Baugruppe in axialer Richtung weiter von der Federkammer entfernt liegt.

Um den Rücktransport des Schmiermittels bzw. Fettes in die Federkammer in geeigneter Weise zu beeinflussen können in der Federkammer, insbesondere in der Nähe der ersten Leitfläche, und/oder in einem beruhigten Raum zwischen erster und zweiter Leitfläche weitere Leitflächen derart angeordnet sein, daß auf die Leitflächen treffende Partikel bei Rotation des Torsionsschwingungsdämpfers in eine gewünschte Richtung, vorzugsweise in Richtung der Federkammer bzw. der Feder abgelenkt werden.

Der Torsionsschwingungsdämpfer kann desweiteren Mittel, die in Abhängigkeit von einem Verdrehwinkel zwischen erster Baugruppe und zweiter Baugruppe einen Spalt zwischen diesen Baugruppen verschließen, aufweisen. Diese Mittel können derart ausgestaltet sein, daß die Federkammer vollständig geschlossen wird, wenn ein bestimmter Verdrehwinkel zwischen den beiden Baugruppen erreicht wird und somit die Gefahr von umherspritzendem Fett am größten ist. Bei nur geringem bzw. nicht vorhandenem Verdrehwinkel hingegen kann der Spalt offen belassen werden, so daß - wenigstens an dieser Stelle - eine berührungslose Abdichtung der Federkammer und somit eine geringe Reibung gewährleistet ist.

Vorzugsweise umfassen die Verschließmittel wenigstens eine Nase, die bei einem bestimmten Verdrehwinkel in axialer Richtung bewegt wird. Diese Nase kann mit einem Schließblech verbunden werden, welches bei axialer Bewegung der Nase den Spalt zwischen erster Baugruppe und zweiter Baugruppe überbrückt. Es ist insbesondere möglich, auch ein bereits vorhandenes Leitblech als Schließblech zu nutzen.

Als bestimmungsgemäßer Antrieb für die Nase kann jede bauliche Einheit des Torsionsschwingungsdämpfers genutzt werden, die eine Verdrehung zwischen erster Baugruppe und zweiter Baugruppe indiziert. Insbesondere können dieses Vorsprünge an den ersten oder zweiten Baugruppe sein. Besonders geeignet sind allerdings Federkeile, zwischen welchen die Federn angeordnet sind.

Darüber hinaus kann der Torsionsschwingungsdämpfer einen durch Fliehkräfte bewirkten Fetttransport aufweisen. Während des Betriebes wird das Fett in verschiedenste Richtungen in der Federkammer verspritzt bzw. verteilt. In der Regel ist jedoch das Fett nur an bestimmten Bereichen in der Federkammer vonnöten. Durch das Vorsehen eines erfindungsgemäßen Fetttransportes kann das in der Federkammer verteilte Fett an die gewünschten Positionen zurückgeführt werden.

Vorteilhafterweise weist der Fetttransport einen radial innen angeordnete Fettaufnahme und eine radial weiter außen angeordnete Fettabgabe auf, wobei zwischen Fettabgabe und Fettaufnahme Mittel vorgesehen sind, die das Fett bei seinem Weg von der Fettabgabe zur Fettaufnahme in Umfangsrichtung verlagern. Während durch die Fliehkräfte eine radiale Bewegung des Fetts automatisch erfolgt, ermöglichen die erfindungsgemäßen Verlagerungsmittel einen gezielten Transport des Fetts auch in Umfangsrichtung.

Als erfindungsgemäße Fettaufnahme kann jeder Oberfläche des Torsionsschwingungdämpfers dienen. Insbesondere kann das Fett darüber hinaus auch durch Spalte oder Öffnungen aufgenommen werden, z. B. durch einen hinter eine Leitfläche führenden Spalt.

Die erfindungsgemäßen Verlagerungsmittel können z. B. an einer Oberfläche mit radialer Komponente ausgebildete Strukturen, wie Ableitflächen, sein, durch welche ein Partikel, wie ein Fetteilchen, in Umfangsrichtung abgelenkt wird, wenn es durch Fliehkräfte radial nach außen bewegt wird.

Es versteht sich, daß der vorbeschriebene Fetttransport unabhängig von den übrigen Merkmalen vorteilhaft bei einem Torsionsschwingungsdämpfer Verwendung finden kann, bei welchem Fett nur an bestimmten Stellen vonnöten ist.

Weitere Vorteile, Eigenschaften und Ziele vorliegender Erfindung finden sich in der folgenden Beschreibung anliegender Zeichnung, in welcher zehn Ausführungsformen zum Teil erfindungsgemäßen, zum Teil nicht erfindungsgemäßer Torsionsschwingungsdämpfer beispielhaft dargestellt sind. In der Zeichnung zeigen:
- Figur 1: eine erste Ausführungsform eines nicht erfindungsgemäßen Torsionsschwingungsdämpfers im Schnitt;
- Figur 2: einen Ausschnitt aus Figur 1;
- Figur 3: eine zweite Ausführungsform eines nicht erfindungsgemäßen Torsionsschwingungsdämpfers an einer Nase einer ersten Baugruppe geschnitten,;
- Figur 4: den Torsionsschwingungsdämpfer nach Figur 3 in ähnlicher Darstellung wie Figur 2;
- Figur 5: eine dritte Ausführungsform eines nicht erfindungsgemäßen Torsionsschwingungsdämpfers in ähnlicher Darstellung wie Figur 2;
- Figur 6a: eine vierteAusführungsform eines erfindungsgemäßen Torsionsschwingungsdämpfers in ähnlicher Darstellung wie Figur 3;
- Figur 6b: den Torsionsschwingungsdämpfer nach Figur 6 in ähnlicher Darstellung wie Figur 2;
- Figur 7a: eine Variante des vierten Torsionsschwingungsdämpfers in ähnlicher Darstellung wie in Figur 3;
- Figur 7b: die Variante nach Figur 7a in ähnlicher Darstellung wie Figur 2;
- Figur 8a: eine weitere Variante des vierten Torsionsschwingungsdämpfers im Schnitt;
- Figur 8b: die weitere Variante nach Figur 8a in ähnlicher Darstellung wie Figur 1;
- Figur 8c: die weitere Variante nach Figuren 8a und 8a in ähnlicher Darstellung wie Figur 2;
- Figur 9a: eine fünfte Ausführungsform eines nicht erfindungsgemäßen Torsionsschwingungsdämpfers in ähnlicher Darstellung wie Figur 1;
- Figur 9b: den Torsionsschwingungsdämpfer nach Figur 8 in ähnlicher Darstellung wie Figur 2;
- Figur 10: eine sechste Ausführungsform eines erfindungsgemäßen Torsionsschwingungsdämpfers in ähnlicher Darstellung wie Figur 3;
- Figur 11: den Torsionsschwingungsdämpfer nach Figur 10 in ähnlicher Darstellung wie Figur 2;
- Figur 12: eine siebte Ausführungsform eines nicht erfindungsgemäßen Torsionsschwingungsdämpfers in ähnlicher Darstellung wie Figur 2;
- Figur 13: eine achte Ausführungsform eines erfindungsgemäßen Torsionsschwingungsdämpfers in ähnlicher Darstellung wie Figur 2;
- Figur 14: den Torsionsschwingungsdämpfer nach Figur 13 in einer anderen Betriebsstellung;
- Figur 15: eine neunte Ausführungsform eines nicht erfindungsgemäßen Torsionsschwingungsdämpfers in ähnlicher Darstellung wie Figur 2 und
- Figur 16: eine zehnte Ausführungsform eines nicht erfindungsgemäßen Schwingungsdämpfers in ähnlicher Darstellung wie Figur 2.

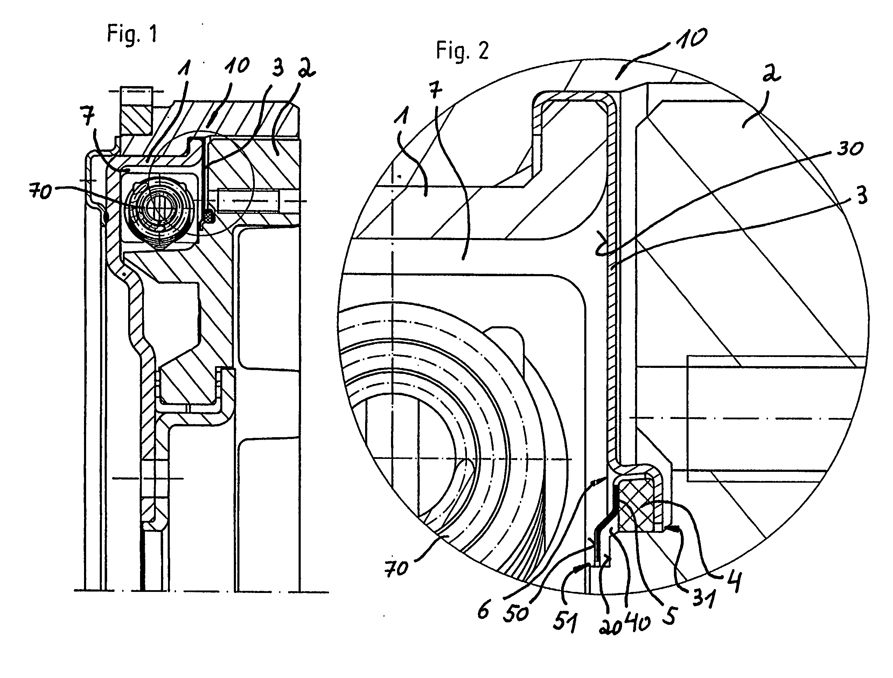

Hierbei handelt es sich bei den in den Figuren 1 bis 5, 9a und 9b sowie 12 und 15-16 dargestellten Beispielen nicht um Ausführungsbeispiele der Erfindung sondern um Beispiele, welche das Verständnis der Erfindung erleichtern.

Der nicht erfindungsgemäße Torsionsschwingungsdämpfer der ersten Ausführungsform (Figuren 1 und 2) weist eine erste Baugruppe 1 und eine zweite Baugruppe 2 auf, die gegeneinander drehbeweglich angeordnet sind. Die beiden Baugruppen 1 und 2 schließen eine Federkammer 7 ein, in welcher eine Federanordnung 70 vorgesehen ist. Diese Federanordnung 70 ist zwischen den beiden Baugruppen 1 und 2 tangential wirksam, wobei die erste Baugruppe 1 Nasen 72 aufweist, die mit Federkeilen 71 der Federanordnung 70 wechselwirken.

An der ersten Baugruppe 1 ist ein scheibenringförmiges Leitblech 3 angeclipst (Clipsverbindung 10), welches eine erste Leitfläche 30 aufweist und von der zweiten Baugruppe 2 über einen Spalt 31 beabstandet ist.

Desweiteren weist dieser Torsionsschwingungsdämpfer eine ringscheibenförmige Leitscheibe 5 auf, die an dem Leitblech 3 befestigt ist. Diese Leitscheibe 5 ist über einen Spalt 51 von der zweiten Baugruppe 2 beabstandet und weist eine zweite Leitfläche 50 auf.

Hinter der Leitscheibe 5 bzw. der zweiten Leitfläche 50 befindet sich ein beruhigter Raum 40, welcher teilweise durch einen Dichtring 4 aufgefüllt ist. Der Dichtring 4 liegt an der zweiten Baugruppe 2 an und überdeckt auf diese Weise den axial ausgerichteten Spalt 31 zwischen erster Leitfläche 30 und zweiter Baugruppe 2. In vorliegendem Ausführungsbeispiel besteht der Dichtring 4 aus Filz.

An der radial außenliegenden Seite des beruhigten Raumes 40 sind zwischen erster Leitfläche 30 und zweiter Leitfläche 50 bzw. zwischen Leitblech 3 und Leitscheibe 5 Öffnungen 6 vorgesehen.

Auf der der Federkammer 7 abgewandten Seite des Spaltes 51 zwischen zweiter Baugruppe 2 und zweiter Leitfläche 50 ist eine dritte Leitfläche 20 angeordnet. Jede der drei Leitflächen 30, 50 und 20 weist eine axiale Oberflächenkomponente auf, die zur Federkammer hinweist. Bei rotierendem Torsionsschwingungs-dämpfer werden somit auf den Leitflächen 30, 50 und 20 befindliche Partikel radial nach außen bewegt und verbleiben somit in der Federkammer 7. Durch den Spalt 51 eingetretene Partikel werden auf der dritten Leitfläche 20 in den beruhigten Raum 40 befördert und gelangen von dort, durch die Zentrifugalkraft bedingt, mit den in dem Dichtring befindlichen Partikeln auf die erste Leitfläche 30 und durch die Öffnung 6 zurück in die Federkammer 7. Ebenso werden Partikel auf der zweiten Leitfläche 50 radial nach außen gefördert und gelangen aufgrund der Zentrifugalkraft auf die erste Leitfläche 30.

Der Dichtring 4 ist derart gewählt, daß er bei einer gewünschten Drehzahl des Torsionsschwingungsdämpfers von der zweiten Baugruppe abhebt. Auf diese Weise ist bei diesen und höheren Drehzahlen eine berührungslose Abdichtung der Federkammer 7 gewährleistet.

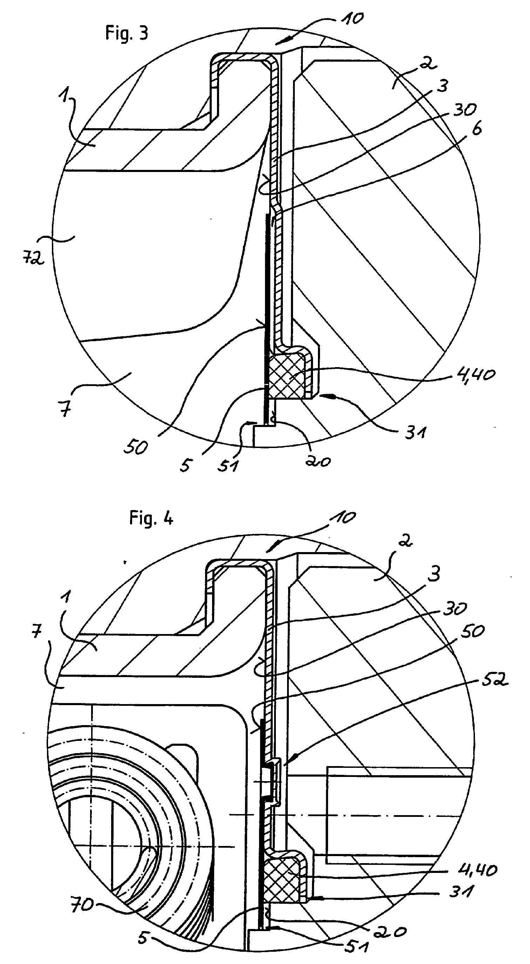

Der Torsionsschwingungsdämpfer nach der zweiten Ausführungsform (Figuren 3 und 4) entspricht im wesentlichen dem nach der ersten Ausführungsform. Die zweite Ausführungsform weist jedoch eine im wesentlichen planare Leitscheibe 5 auf, die mittels mehrerer Absenkungen (Verbindungen 52) formschlüssig mit dem Leitblech 3 verbunden ist.

Zwischen den Verbindungsstellen 52 sind radiale, längliche Ausnehmungen des Leitblechs 3 vorgesehen, die die Öffnungen 6 bilden.

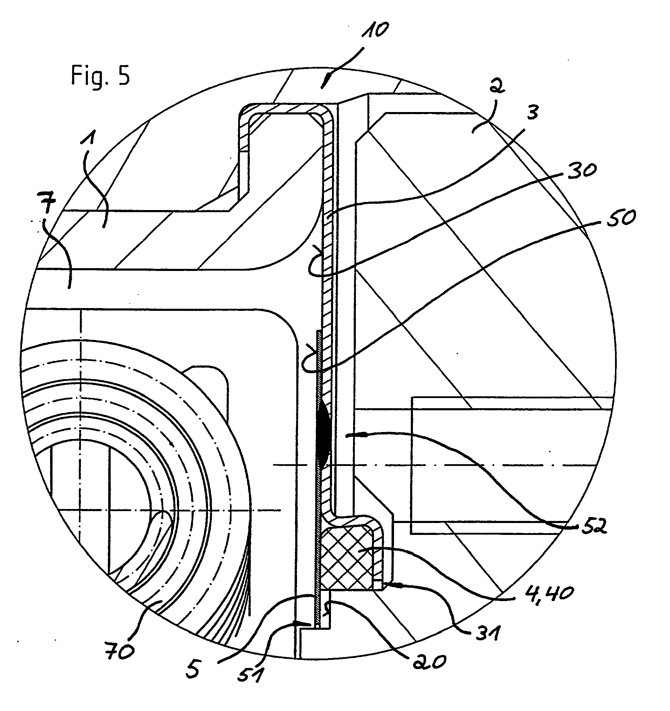

Nahezu baugleich ist die dritte Ausführungsform (Figur 5), die sich von der zweiten Ausführungsform lediglich dadurch unterscheidet, daß an der Verbindungstelle 52 ein Schweißpunkt vorgesehen ist. Alternativ kann an der Verbindungsstelle 52 jeweils eine linsenförmige Ausnehmung in dem Leitblech 3 vorgesehen sein, in welche jeweils ein entsprechender Vorsprung der Leitscheibe 5 formschlüssig eingreift.

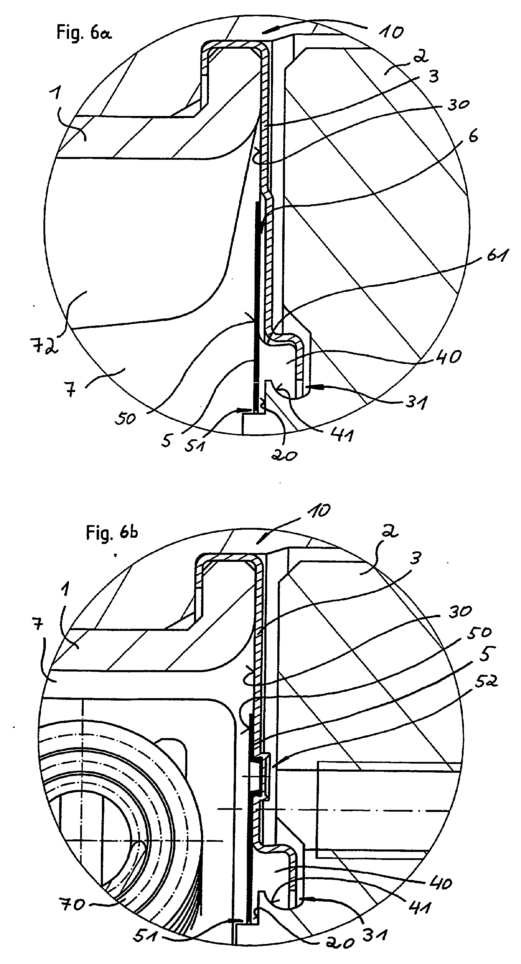

Auch die vierte Ausführungsform (Figuren 6a und 6b) entspricht im wesentlichen der zweiten Ausführungsform. Bei dieser ist jedoch auf einen Dichtring zur Gänze verzichtet worden. Statt dessen weist die zweite Baugruppe 2 eine konkave Leitfläche 41 auf, die von dem Spalt 31 zwischen zweiter Baugruppe 2 und erster Leitfläche 30 in den beruhigten Raum 40 reicht und sich in einem Fortsatz mit der dritten Leitfläche 20 trifft. Bei Rotation dieses Torsionsschwingungsdämpfers werden auf der dritten Leitfläche 20 oder der konkaven Leitfläche 41 befindliche Partikel zu dem Fortsatz transportiert, um bei entsprechender Überwindung der Adhäsionskräfte radial in den beruhigten Raum 40 auf die erste Leitfläche hin gefördert zu werden.

In Umfangsrichtung ist bei dieser Ausführungsform beidseits jeder Öffnung 6 jeweils eine schräge Ableitfläche 61 vorgesehen, durch welche ein Ansammeln von Fett in dem beruhigten Raum 40 an zur Rotationsachse parallelen Flächen vermieden bzw. reduziert wird. Diese Ableitflächen 61 weisen eine axial gerichtete Oberflächenkomponete auf und leiten auf diese Weise Fett in Umfangsrichtung ab.

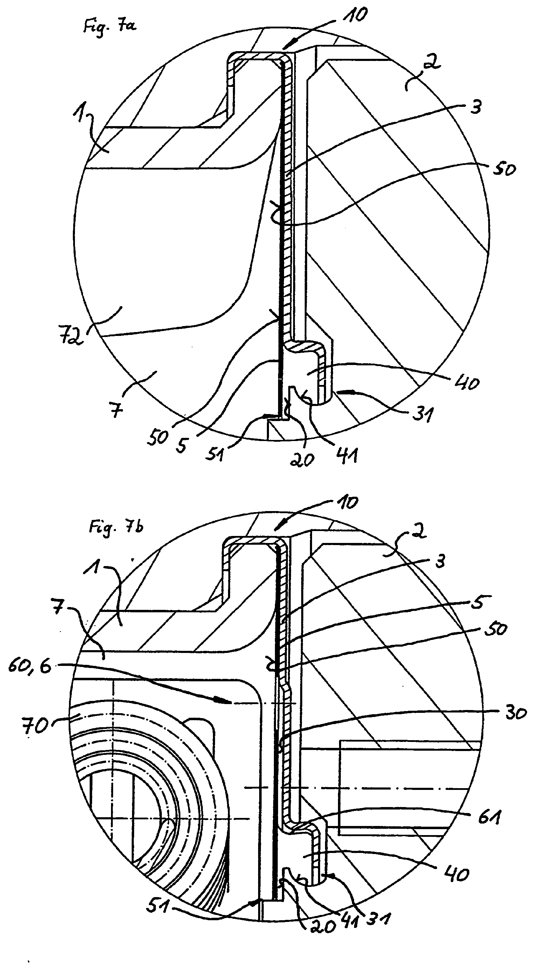

Eine erste Variante der vierten Ausführungsform ist in den Figuren 7a und 7b dargestellt. Während bei der vierten Ausführungsform die Öffnungen 6 auf Höhe der Nasen 72 der ersten Baugruppe 1 angweordnet sind, befinden sich bei dieser Variante die Öffnungen 6 auf Höhe der Federn 70. Auf diese Weise wird, je nach bestehenden Anforderungen, ein Transport des Fettes an die gewünschte Position gewährleistet.

Bei dieser ersten Variante ist die Leitscheibe 5 planar ausgestaltet und besitzt einen Außenradius, der annähernd dem Außenradius des Leitblechs 3 entspricht. Auf diese Weise kann die Leitscheibe 5 gemeinsam mit dem Leitblech 3 an der ersten Baugruppe 1 durch die Clips-Verbindung 10 befestigt werden und es wird eine besonders einfache Montage dieser Ausführungsform gewährleistet. In der Leitscheibe 5 sind auf Höhe der radial außenliegenden Seite des beruhigten Raumes 40 Löcher 60 vorgesehen, die die Öffnungen 6 bilden und durch welche die Fettabfuhr erfolgt.

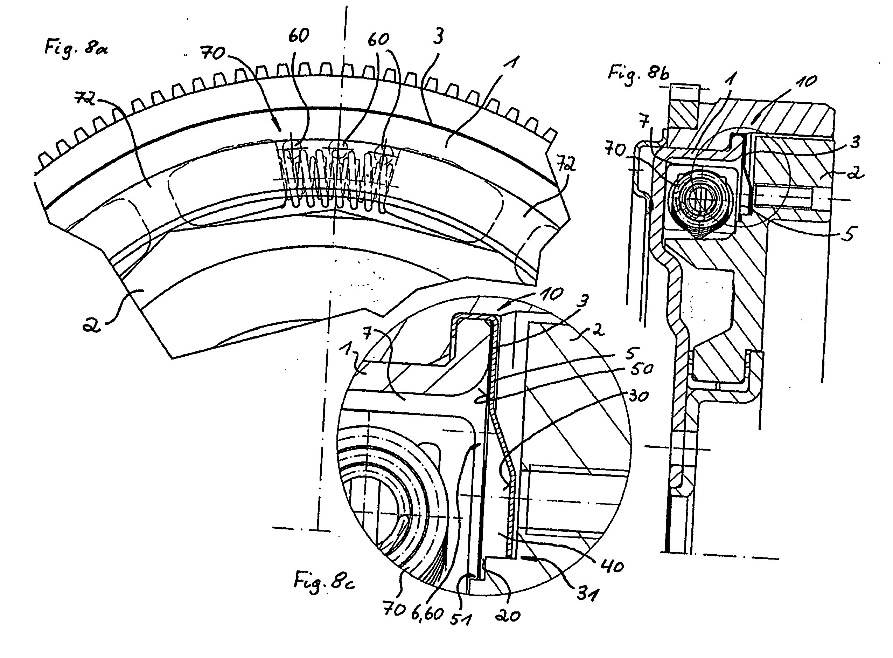

Eine in Figuren 8a bis 8c dargestellte zweite Variante weist gegenüber der ersten Variante einen vergrößerten, ringförmigen beruhigten Raum 40 auf. Desweiteren sind in der Leitscheibe 5 auf Höhe der Federanordnung 70 drei Löcher 60 vorgesehen, statt des einen Lochs 60 bei der ersten Variante. Bei dieser zweiten Variante ist auf Ableitflächen verzichtet worden und der Fetttransport erfolgt schlicht durch geeignete Anordnung der Löcher 60. Die Verlagerungsmittel für eine Fettverlagerung umfassen bei dieser Variante die Löcher 60 und die erste Leitfläche 30, an welche sich das Fett ansammelt bis es durch die Löcher 60 abgeführt wird.

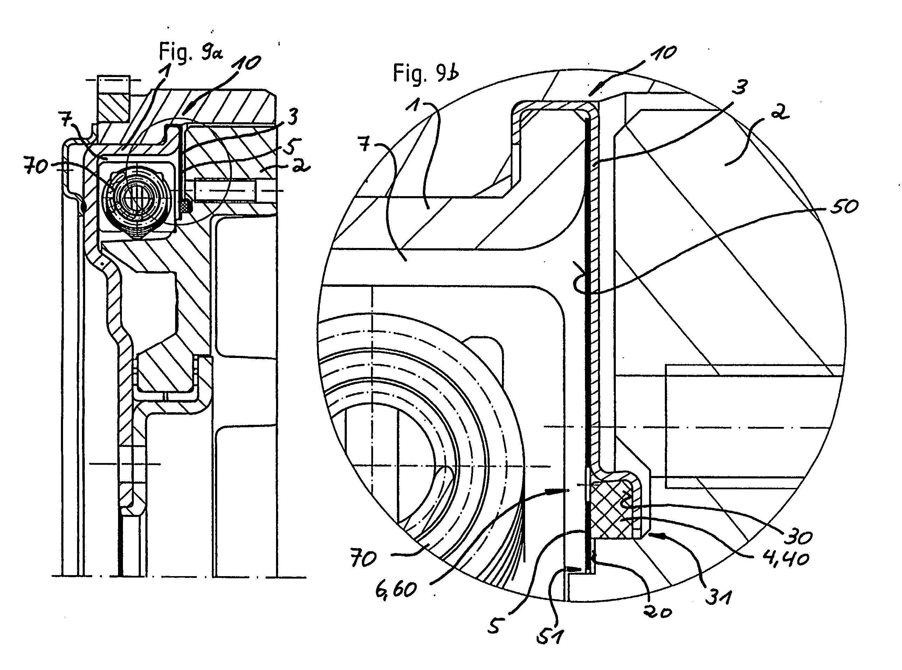

Auch die fünfte Ausführungsform (Figuren 9a und 9b) eines nicht erfindungsgemäßen Torsionsschwingungsdämpfers entspricht im wesentlichen den vorgenannten Ausführungsformen. Bei dieser fünften Ausführungsform, ist jedoch ein Dichtring 4 vorgesehen.

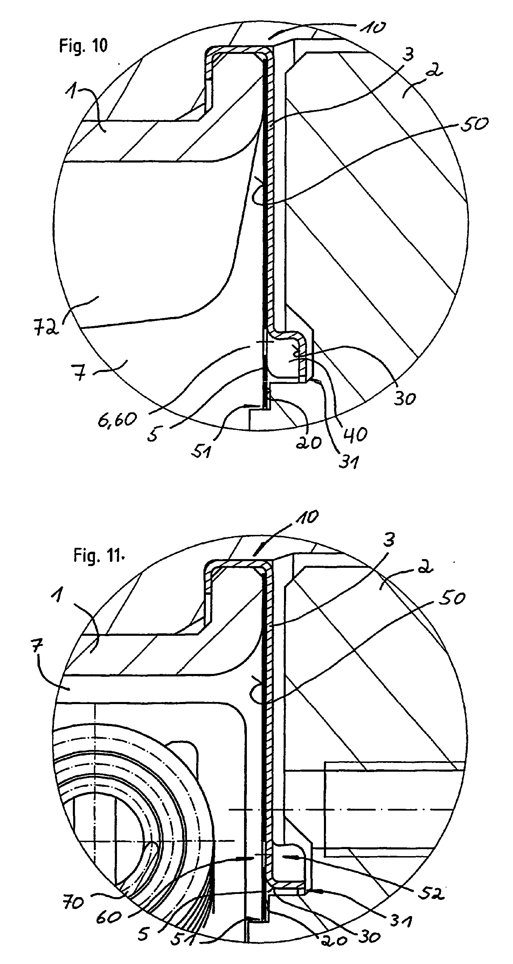

Gegenüber der fünften Ausführungsform ist bei der sechsten Ausführungsform (Figuren 10 und 11) auf einen Dichtring verzichtet. Desweiteren ist bei der sechsten Ausführungsform der beruhigte Raum 40 nicht durchgehend ringförmig ausgestaltet, sondern in Kammern unterteilt. Zwischen diesen Kammern befinden sich Stege, an welchen das Leitblech 3 und die Leitscheibe 5 zusätzlich verbunden sind. Für diese Verbindungen werden Löcher 60 genutzt, die auf Höhe des beruhigten Raumes 40 als Öffnungen 6 zwischen Leitblech 3 und zweiter Leitfläche 50 dienen. Bei dieser Ausführungsform ist somit eine hohe Stabilität der Leitscheibe 5 gewährleistet, so daß insbesondere bei dieser Ausführungsform auch ein weniger stabiles Material als Leitscheibe 5 Verwendung finden kann.

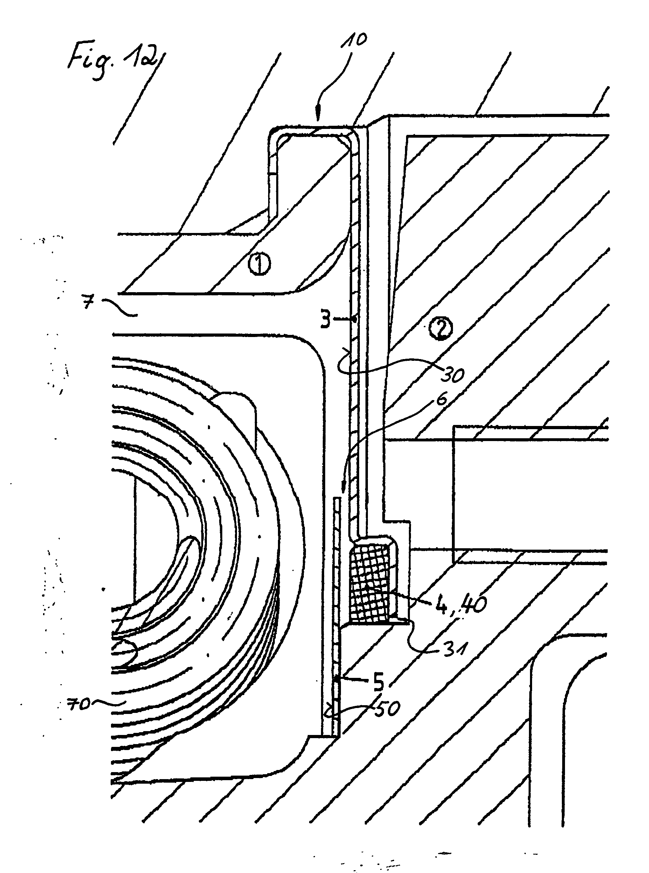

Bei der siebten Ausführungsform (Figur 12) ist die Leitscheibe 5 nicht mit dem Leitblech 3 verbunden, sondern auf die zweite Baugruppe 2 aufgesetzt. Insofern dreht die Leitscheibe 5 bei dieser Ausführungsform gemeinsam mit der zweiten Baugruppe 2. Bei dieser Ausführungsform wird die Öffnung 6 durch einen axialen Spalt zwischen Leitblech 3 und Leitscheibe 5 gebildet.

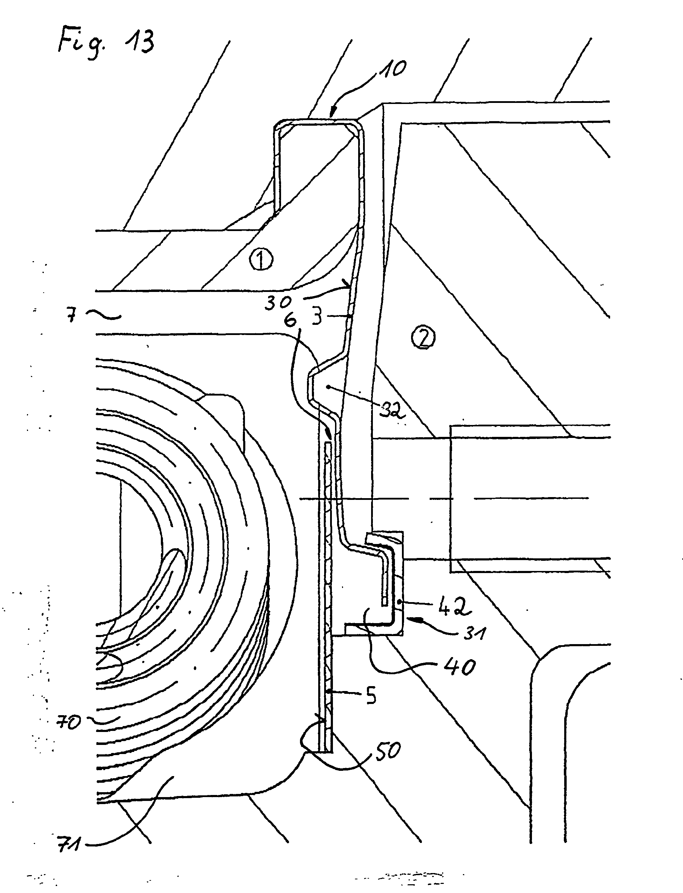

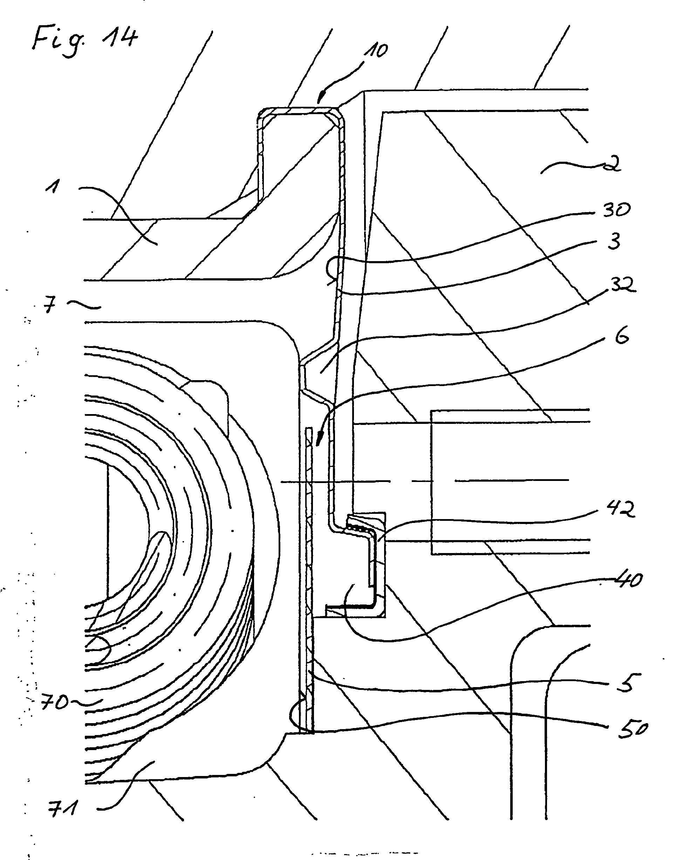

Auch bei der achten Ausführungsform (Figuren 13 und 14) ist die Leitscheibe 5 auf die zweite Baugruppe 2 aufgesteckt und von dem Leitblech 3 über die Öffnung 6 beabstandet. Bei dieser Ausführungsform weist das Leitblech 3 Nasen 32 auf, die derart mit jeweils an den Enden der Federn 70 vorgesehenen Federkeilen 71 wechselwirken, daß die Nasen 32 von einem Federkeil 71 auf die zweite Baugruppe 2 zubewegt werden, wenn die Feder 70 komprimiert ist, also sich die zweite Baugruppe 2 relativ zur ersten Baugruppe 1 bewegt. Durch diese Bewegung wird das Leitblech 3 gegen einen Dichtkörper 42 gepreßt, der an der zweiten Baugruppe 2 vorgesehen ist. Auf diese Weise wird die Federkammer 7 vollständig geschlossen, wenn die Feder 70 komprimiert wird und somit die Gefahr von umherspritzendem Fett am größten ist. Bei nicht oder nur gering komprimierter Feder hingegen liegt eine berührungslose Abdichtung der Federkammer 7 vor.

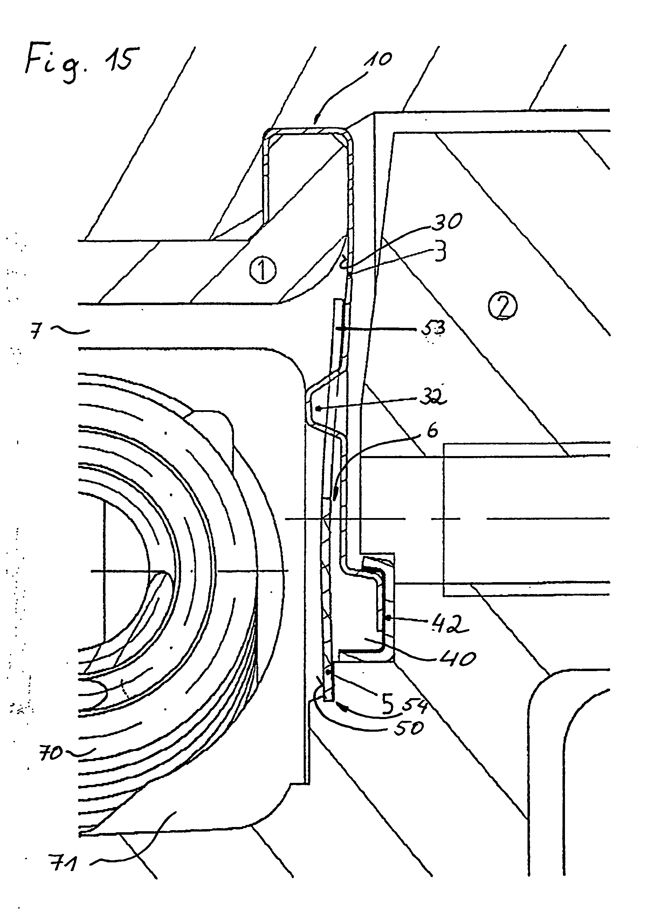

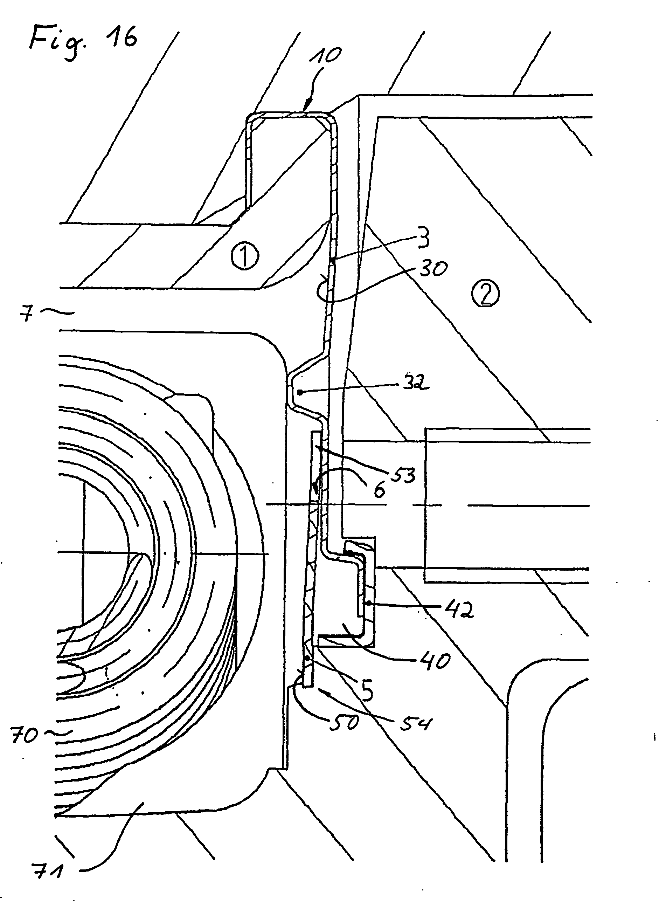

Bei neunten und zehnten Ausführungsform (Figuren 15 und 16) hingegen wird das Leitblech 3 ständig an den Dichtkörper 42 gepreßt. Die hierfür erforderliche Kraft wird durch Finger 53, der Leitscheibe 5 aufgebracht. Um einen stabilen Sitz der Leitscheibe 5 trotz dieser axial wirksamen Kräfte zu gewährleisten, ist die Leitscheibe 5 mittels einer Clips-Verbindung 54 an der zweiten Baugruppe 2 befestigt. Insofern gleitet bei der neunten und zehnten Ausführungsform das Leitblech 3 ständig über den Dichtkörper 42. Bei einer Relativbewegung zwischen den beiden Baugruppen 1 und 2 wirkt auch der Federkeil 71 über die Nase 32 auf das Leitblech 3 und verstärkt die Abdichtungskraft des Leitbleches 3 auf den Dichtkörper 42. Die neunte und die zehnte Ausführungsform unterscheiden sich durch den radialen Abstand des Angriffspunktes der Finger 53 an dem Leitblech 3. Auf diese Weise kann die resultierende Kraft, insbesondere auch auf die zweite Baugruppe 2 reguliert werden. Dieses bedeutet, daß die konstruktive Gestaltung der Finger 53 bei einer Verwendung der zweiten Baugruppe 2 als Kupplungsflansch einer Kupplung erreicht werden kann,daß die resultierende Kraft in Richtung der Betätigungsskraft der Kupplung wirkt.

## Patentansprüche

1. Torsionsschwingungsdämpfer mit zwei gegeneinander drehbeweglich angeordneten Baugruppen (1, 2) sowie mit einer Federkammer (7), in welcher eine Federanordnung (70) vorgesehen ist, welche zwischen den beiden Baugruppen (1, 2) tangential wirksam ist, ***dadurch gekennzeichnet, dass*** die erste Baugruppe (1) eine erste Leitfläche (30) aufweist und die Federkammern (7) radial außen abdichtet, wobei die erste Leitfläche von der zweiten Baugruppe (2) durch einen Spalt (31) beabstandet und im wesentlichen radial angeordnet ist und wobei eine im wesentlichen radial angeordnete zweite Leitfläche (50) vorgesehen ist, die den Spalt (31) derart federkammerseitig überdeckt, dass die Federkammer (7) zumindest bei geringen bzw. bei nicht vorhandenen Verdrehwinkeln zwischen den beiden Baugruppen (1, 2) und bei einer Rotation des Torsionsschwingungsdämpfers berührungslos abgedichtet ist.

2. Torsionsschwingungsdämpfer nach Anspruch 1, ***dadurch gekennzeichnet, daß*** die erste Leitfläche (30) als ein Leitblech (3) ausgestaltet ist, welches mit der ersten Baugruppe (1) fest verbunden ist.

3. Torsionsschwingungsdämpfer nach Anspruch 2, ***dadurch gekennzeichnet, daß*** das Leitblech (3) ringscheibenförmig ausgestaltet ist.

4. Torsionsschwingungsdämpfer nach einem der vorhergehenden Ansprüche, ***dadurch gekennzeichnet, daß*** die zweite Leitfläche (50) als Leitscheibe (5) ausgestaltet ist.

5. Torsionsschwingungsdämpfer nach Anspruch 4, ***dadurch gekennzeichnet, daß*** die Leitscheibe (5) ringscheibenförmig ausgestaltet ist.

6. Torsionsschwingungsdämpfer nach Anspruch 4 oder 5, ***dadurch gekennzeichnet, daß*** die Leitscheibe (5) fest mit der ersten Leitfläche (50) verbunden ist.

7. Torsionsschwingungsdämpfer nach einem der Ansprüche 1 bis 6, ***dadurch gekennzeichnet, daß*** zwischen erster Leitfläche (30) und zweiter Leitfläche (50) zumindest eine zur Federkammer (7) hinweisende Öffnung (6) vorgesehen ist.

8. Torsionsschwingungsdämpfer nach Anspruch 7, ***dadurch gekennzeichnet, daß*** die Öffnung (6) derart angeordnet ist, daß ein Partikel mit einer radialen Bewegungskomponente hindurchtreten kann.

9. Torsionsschwingungsdämpfer nach einem der Ansprüche 1 bis 8, ***dadurch gekennzeichnet, daß*** zwischen erster und zweiter Leitfläche (30, 50) in der Nähe des Spaltes (31), welcher zwischen erster Leitfläche (30) und zweiter Baugruppe (29 angeordnet ist, ein beruhigter Raum (40) vorgesehen ist.

10. Torsionsschwingungsdämpfer nach Anspruch 9, ***dadurch gekennzeichnet, daß*** der beruhigte Raum (40) radial außen eine Öffnung (6) aufweist, die zur Federkammer führt.

11. Torsionsschwingungsdämpfer nach einem der Ansprüche 1 bis 10, ***dadurch gekennzeichnet, daß*** die zweite Baugruppe (2) eine dritte im wesentlichen radiale Leitfläche (20) umfaßt, welche einen axialen Spalt (51) zwischen zweiter Leitfläche (50) und zweiter Baugruppe (2) auf einer der Federkammer (7) abgewandten Seite überdeckt.

12. Torsionsschwingungsdämpfer nach Anspruch 11, ***dadurch gekennzeichnet, daß*** der Spalt (31) zwischen erster Leitfläche (30) und zweiter Baugruppe (2) in axialer Richtung von der Federkammer (7) weiter entfernt ist, als die dritte Leitfläche (20).

13. Torsionsschwingungsdämpfer nach einem der Ansprüche 1 bis 12, ***gekennzeichnet durch*** Mittel (3, 32, 42), die in Abhängigkeit von einem Verdrehwinkel zwischen erster Baugruppe (1) und zweiter Baugruppe (2) einen Spalt zwischen diesen Baugruppen (1, 2) verschließen.

14. Torsionsschwingungsdämpfer nach Anspruch 13, ***dadurch gekennzeichnet, daß*** die Verschließmittel (3, 32, 42) wenigstens eine Nase (32), umfassen, die bei einem bestimmten Verdrehwinkel in axialer Richtung bewegt wird.

15. Torsionsschwingungsdämpfer nach einem der Ansprüche 1 bis 14, ***gekennzeichnet durch*** einen **durch** Fliehkräfte bewirkten Fetttransport.

16. Torsionsschwingungsdämpfer nach Anspruch 15, ***dadurch gekennzeichnet, daß*** der Fetttransport eine radial innen angeordnete Fettaufnahme, insbesondere einen hinter eine Leitfläche (5) führenden Spalt (51), und eine radial weiter außen angeordnete Fettabgabe, insbesondere wenigstens eine Öffnung (6) oder ein Loch (60), aufweist, wobei zwischen Fettabgabe und Fettaufnahme Mittel vorgesehen sind, die das Fett bei seinem Weg von der Fettabgabe zur Fettaufnahme in Umfangsrichtung verlagern.

## Claims

1. A torsional vibration damper with two subassemblies (1, 2) disposed for rotation with respect to each other, as well as with a spring chamber (7) in which there is provided a spring arrangement (70) that is tangentially operative between said two subassemblies (1, 2), ***characterized in that*** the first subassembly (1) has a first directional surface (30) and seals the spring chambers (7) radially outside, said first directional surface being spaced from the second subassembly (2) by a gap (31) and being disposed substantially radially and a substantially radially disposed second directional surface (50) being provided for covering the gap (31) in such a manner on the side of the spring chamber that said spring chamber (7) is sealed without touching, at least when the rotation angles between the two subassemblies (1, 2) are small or non-existing and when the torsional vibration damper is rotating.

2. The torsional vibration damper as set forth in claim 1, ***characterized in that*** the first directional surface (30) is configured to be a directional baffle (3) that is firmly connected to the first subassembly (1).

3. The torsional vibration damper as set forth in claim 2, ***characterized in that*** the directional baffle (3) is configured in the shape of an annular disk.

4. The torsional vibration damper as set forth in any one of the afore mentioned claims, ***characterized in that*** the second directional surface (50) is configured to be a directional disk (5).

5. The torsional vibration damper as set forth in claim 4, ***characterized in that*** the directional disk (5) is configured in the shape of an annular disk.

6. The torsional vibration damper as set forth in claim 4 or 5, ***characterized in that*** the directional disk (5) is firmly connected to the first directional surface (50).

7. The torsional vibration damper as set forth in any one of the claims 1 through 6, ***characterized in that*** at least one opening (6) directed toward the spring chamber (7) is provided between the first directional surface (30) and the second directional surface (50).

8. The torsional vibration damper as set forth in claim 7, ***characterized in that*** the opening (6) is disposed for a particle with a radial movement component to pass through.

9. The torsional vibration damper as set forth in any one of the claims 1 through 8, ***characterized in that*** a quieted space (40) is provided between the first and the second directional surface (30, 50) in proximity to the gap (31) which is interposed between the first directional surface (30) and the second subassembly (29).

10. The torsional vibration damper as set forth in claim 1, ***characterized in that*** the quieted space (40) has an opening (6) leading to the spring chamber that is located radially outside.

11. The torsional vibration damper as set forth in any one of the claims 1 through 10, ***characterized in that*** the second subassembly (2) comprises a third substantially radial directional surface (20) that covers an axial gap (51) between the second directional surface (50) and the second subassembly (2) on a side turned away from the spring chamber (7).

12. The torsional vibration damper as set forth in claim 11, ***characterized in that**,* in the axial direction, the gap (31) between the first directional surface (30) and the second subassembly (2) is more distant from the spring chamber (7) than the third directional surface (20).

13. The torsional vibration damper as set forth in any one of the claims 1 through 12, ***characterized by*** means (3, 32, 42) that close a gap between the two subassemblies (1, 2) as a function of an angle of rotation between the first subassembly (1) and the second subassembly (2).

14. The torsional vibration damper as set forth in claim 13, ***characterized in that*** the closing means (3, 32, 42) comprise at least one nose (32) that is moved in the axial direction at a certain angle of rotation.

15. The torsional vibration damper as set forth in any one of the claims 1 through 14, ***characterized by*** a grease transport caused by centrifugal forces.

16. The torsional vibration damper as set forth in claim 15, ***characterized in that*** the grease transport has a grease receptacle, more specifically a gap (51) leading behind a directional surface (5), that is disposed radially inside, and a grease dispensing port disposed farther outside in the radial direction, more specifically at least one opening (6) or hole (60), means being provided between grease dispensing port and grease receptacle for displacing said grease in the circumferential direction from the grease dispensing port to the grease receptacle.

## Revendications

1. Amortisseur de vibrations de torsion avec deux sous-ensembles (1, 2) disposés mobiles en rotation l'un par rapport à l'autre, ainsi qu'avec une chambre de ressort (7) dans laquelle est prévu un agencement de ressorts (70) à action tangentielle entre les deux sous-ensembles (1, *2), **caractérisé en ce que*** le premier sous-ensemble (1) comporte une première surface directionnelle (30) et isole hermétiquement les chambres de ressort (7) radialement à l'extérieur, cette première surface directionnelle étant espacée du deuxième sous-ensemble (2) par une fente (31) et disposée sensiblement radialement, et une deuxième surface directionnelle (50) disposée sensiblement radialement étant prévue pour recouvrir la fente (31) du côté de la chambre de ressort de manière à ce que la chambre de ressort (7) est isolée hermétiquement sans contact, du moins dans le cas d'angles de rotation faibles ou inexistants entre les deux sous-ensembles (1, 2) et d'une rotation de l'amortisseur de vibrations de torsion.

2. Amortisseur de vibrations de torsion selon la revendication 1, ***caractérisé en ce que*** la première surface directionnelle (30) est conformée sous forme de chicane (3) qui est solidarisée de façon fixe au premier sous-ensemble (1).

3. Amortisseur de vibrations de torsion selon la revendication 2, ***caractérisé en ce que*** la chicane (3) est conformée en forme de disque annulaire.

4. Amortisseur de vibrations de torsion selon l'une quelconque des revendications précédentes, ***caractérisé en ce que*** la deuxième surface directionnelle (50) est conformée en forme de disque directionnel (5).

5. Amortisseur de vibrations de torsion selon la revendication 4, ***caractérisé en ce que*** le disque directionnel (5) est conformé en forme de disque annulaire.

6. Amortisseur de vibrations de torsion selon la revendication 4 ou 5, ***caractérisé en ce que*** le disque directionnel (5) est solidarisé de façon fixe avec la première surface directionnelle (50).

7. Amortisseur de vibrations de torsion selon l'une quelconque des revendications 1 à 6, ***caractérisé en ce qu'**au* moins une ouverture (6) dirigée vers la chambre de ressort (7) est prévue entre la première surface directionnelle (30) et la deuxième surface directionnelle (50).

8. Amortisseur de vibrations de torsion selon la revendication 7, ***caractérisé en ce que*** l'ouverture (6) est disposée de manière à permettre à une particule ayant une composante de mouvement radiale de passer au travers.

9. Amortisseur de vibrations de torsion selon l'une quelconque des revendications 1 à 8, ***caractérisé en ce qu'**un* espace apaisé (40) est prévu entre la première et la deuxième surface directionnelle (30, 50) à proximité de la fente (31) ménagée entre la première surface directionnelle (30) et le deuxième sous-ensemble (29).

10. Amortisseur de vibrations de torsion selon la revendication 9, ***caractérisé en ce que*** l'espace apaisé (40) comporte, radialement à l'extérieur, une ouverture (6) menant à la chambre de ressort.

11. Amortisseur de vibrations de torsion selon l'une quelconque des revendications 1 à 10, ***caractérisé en ce que*** le deuxième sous-ensemble (2) comprend une troisième surface directionnelle (20) sensiblement radiale qui recouvre une fente (51) entre la deuxième surface directionnelle (50) et le deuxième sous-ensemble (2) sur un côté détourné de la chambre de ressort (7).

12. Amortisseur de vibrations de torsion selon la revendication 11, ***caractérisé en ce que*** la fente (31) entre la première surface directionnelle (30) et le deuxième sous-ensemble (2) est plus éloignée de la chambre de ressort (7) suivant la direction axiale que la troisième surface directionnelle (20).

13. Amortisseur de vibrations de torsion selon l'une quelconque des revendications 1 à 12, ***caractérisé par*** des moyens (3, 32, 42) qui ferment une fente entre les sous-ensembles (1, 2) en fonction de l'angle de rotation entre le premier sous-ensemble (1) et le deuxième sous-ensemble (2).

14. Amortisseur de vibrations de torsion selon la revendication 13, ***caractérisé en ce que*** les moyens de fermeture (3, 32, 42) comprennent au moins un ergot (32) qui est déplacé suivant la direction axiale à un certain angle de rotation.

15. Amortisseur de vibrations de torsion selon l'une quelconque des revendications 1 à 14, ***caractérisé par*** un transport de graisse provoqué par des forces centrifuges.

16. Amortisseur de vibrations de torsion selon la revendication 15, ***caractérisé en ce que*** le transport de graisse comporte une zone de réception de la graisse, notamment une fente (51) menant derrière une surface directionnelle (5), et une zone de distribution de la graisse disposée radialement plus à l'extérieur, notamment au moins une ouverture (6) ou un trou (60), des moyens déplaçant suivant la direction circonférentielle la graisse sur son trajet de la zone de sa distribution vers la zone de sa réception étant prévus entre la zone de distribution et la zone de réception de la graisse.
